# EUROPEAN PATENT APPLICATION

(11) **EP 3 299 163 A1**
(43) Date of publication of application: **28.03.2018**
(21) Application number: 16200400.6
(22) Date of filing: 24.11.2016
(51) Int. Cl.: B32B 27/06, B32B 27/12, B32B 27/20, B32B 27/22, B32B 27/30, E04F 15/00, E04B 1/82, B32B 5/18

(54) **SOUND INSULATION AND NON-SLIP FLOORING MATERIAL AND METHOD OF PRODUCING THE SAME**

(30) Priority: 23.09.2016 KR 20160121809
(71) Applicant: Dongshin Polymer Co., Ltd., Hongseong-gun, Chungcheongnam-do 32214 (KR); Shinkokasei Co., Ltd., Hanyu city, Saitama (JP)
(72) Inventor: YUON, Chang Bo, Kukishi, Saitama (JP)
(74) Representative: Gulde & Partner

(57) **Abstract**

A sound insulation and non-slip flooring material, which is formed by laminating a plurality of layers through a calender rolling process such that a sound insulation and non-slip function is formed by utilizing a foaming agent contained in a non-slip functional film, and a method of producing the same are provided. The sound insulation and non-slip flooring material is formed by laminating a plurality of layers through a calender rolling process and includes a glass fiber layer interposed between the layers, an ultraviolet coating layer provided at an upper layer among the layers, and a sound insulation and non-slip layer provided at a lower layer among the layers. A non-slip function, a cushion feel, a shock absorption function, and floor serviceability, warming, insulation, soundproof, and dustproof effects of the flooring material are obtained.

## Description

### BACKGROUND OF THE INVENTION

### 1. Field of the Invention

The present invention relates to a sound insulation and non-slip flooring material and a method of producing the same. More particularly, the present invention relates to a sound insulation and non-slip flooring material, which is formed by laminating a plurality of layers through a calender rolling process such that a sound insulation and non-slip function is formed by utilizing a foaming agent contained in a non-slip functional film, and a method of producing the same.

### 2. Description of the Related Art

In general, a flooring (decorating) material, such as floor paper or tile, is placed on the ground or the floor of a building,

The flooring material of the floor paper or the tile is mainly formed of vinyl chloride representing excellent light and flexile properties or excellent cushion and sound adsorption properties.

In other words, the flooring material is produced by mixing or laminating poly vinyl chloride (PVC) or vinyl chloride with another material. The flooring material is generally produced by laminating a plurality of layers including a transparent layer, a printing layer, a resin-impregnated and dimension enhancing layer, a foaming layer, and a release layer. The transparent layer has a function of protecting an ink surface coated onto a printing layer, and the printing layer has a decoration function as the printing layer is provided with color or a pattern. The resin-impregnated and dimension enhancing layer includes Glass-Fiber impregnated with urethane resin to enhance the dimensional stability of a product. The foaming layer has a cushion function. The release layer has an enhancement function and a function of securing to a floor surface.

In addition, a coating layer may be further formed on the upper end of the transparent film layer if necessary to improve abrasion resistance and scratch resistance.

The flooring material is produced by decreasing or increasing the layers according to uses and used in an extensive field.

For example, Korean Patent Registration No. 10-0510836 (issued on Aug. 30 2005; Patent document 1) of the present applicant discloses a method of producing a floor decorative material, which includes interposing a non-fabric layer, which is formed by making glass fiber or mineral wool in the form of a sheet, between an upper PVC layer and a lower PVC layer, sequentially forming a printing layer and a transparent film layer formed of PVC resin on a base layer formed through a thermal pressing process, and forming a release layer including a plasticizer, a filler, and PVC resin under the base layer. The flooring material having the configuration may be separately used in the process of finishing the floor of the building, or may be used after boned to various types of target workpieces by an adhesive.

In addition, recently, in order to remove an odor caused by the use of the adhesive, and to minimize the influence of a voltaic organic compound, a non-slip flooring material has been developed by forming a functional layer under the base layer for nonslip so that the use of the adhesive can be minimized when the flooring material is placed.

For example, Korean Patent Registration No. 10-0600841 (issued on Jul. 06, 2006; Patent document 2) discloses thermoplastic polyurethane composition for a flooring material including a surface treatment layer, a transparent layer, an intermediate layer, a resin-impregnated and dimension enhancing layer, an intermediate layer, a foaming layer, and a release layer. In order to balance the bending of the floor decorative material and prevent the floor decorative material from being deformed due to the floor moisture after placing, the release layer includes a composition including 2-20 weight parts of a softener, 0.1-3.0 weight parts of a stabilizer, 0.1-5.0 weight parts of an antioxidant, 0.1-1.0 weight parts of a UV-absorber, 0.1-3.0 weight parts of a processing agent, 0.1-1.0 weight parts of a slip agent, 5-30 weight parts of a filler, and 2-20 weight parts of pigments, based on 100 weight parts of thermoplastic polyurethane. In addition, the foaming layer having elasticity provides a cushion feel, a shock absorption function, floor serviceability, warming, insulation, a soundproof function, and a dustproof function, the foaming layer includes 2-20 weight part of a softener, 0.1-3.0 weight parts of a stabilizer, 0.1-5.0 weight parts of an antioxidant, 0.1-1.0 weight parts of a UV-absorber, 0.1-3.0 weight parts of a processing agent, and 0.1-1.0 weight parts of a slip agent, 5-30 weight parts of a filler, and 2-20 weight part of pigments, based on 100 weight part of thermoplastic polyurethane, based on 100 weight part of thermoplastic polyurethane. In addition, the foaming layer includes 2-5 weight part of azodicarbonamide.

In addition, Korean Patent Registration No. 10-1149890 (issued on May 18, 2012; Patent document 3) discloses a PLA flooring material. The PLA flooring material includes a surface treatment layer, an upper layer, a foaming layer, and a release layer having the thickness of 0.10-2.0 mm, which are sequentially formed from the top. The upper layer, the foaming layer, or a release layer is formed of PLA resin. The PLA flooring material includes a dimensional stability layer formed on at least one of the upper layer, the foaming layer, and the release layer. The dimensional stability layer further includes at least one of 40-150 weight parts of a non-phthalate based plasticizer, 30 weight parts or less of a viscosity reducing agent, 150 weight parts or less of calcium carbonate, and 20 weight parts or less of titanium dioxide (TiO₂) based on 100 weight parts of one of acrylic resin, melamine resin, and PLA resin. The release layer includes 5-60 weight parts of a plasticizer and 0.1-20 weight parts of a melt strength enhancer based on 100 weight parts of the PLA resin. A lubricant includes at least one of 0.01-10 weight parts of a high fatty acid, 0.01-10 weight parts of a chain extender, 10 weight parts of less of an anti-hydrolysis agent, 500 weight parts or less of calcium carbonate, 200 weight parts or less of wooden flour, 50 weight parts of less of titanium dioxide, and 20 weight parts of less of pine resin, based on 100 weight parts of the PLA resin.

However, according to the flooring material of the present invention, the bending stability is significantly degraded due to the variation in shrinkage which is a physical property between a transparent film layer and a base layer, so that the flooring material is delaminated in the placing process or after the placing process. Accordingly, a joint part is not smoothly formed, and deformed or twisted due to heat or moisture.

In general, the flooring material may be separately used in the process of finishing the floor of the building, or may be used after boned to various types of target workpieces by an adhesive. Accordingly, total volatile organic compounds (TVOC) are volatilized, so that indoor air may be contaminated. In other words, when the flooring material is placed using the adhesive, as the TVOC is volatilized from the adhesive formed of urethane, an eco-friendly effect may not be produced.

Further, according to the non-slip flooring material of the related art, after forming a non-slip layer in an additional line during the production process of the flooring material, a laminating process is additionally provided in a calender line, so that the production process may become complicated, and the production costs may be increased.

### SUMMARY OF THE INVENTION

The present invention is made in order to solve the above problems, and an object of the present invention is to provide a sound insulation and non-slip flooring material, capable of preventing slip by forming a non-slip layer on a lower portion of the flooring material through a foaming process while providing a sound insulation function, and a method of producing the same.

Another object of the present invention is to provide a sound insulation and non-slip flooring material, capable of preventing shrinkage, expansion, and curling which sensitively exert an influence on a surrounding temperature of a product, and a method of producing the same.

Still another object of the present invention is to provide a sound insulation and non-slip flooring material, capable of preventing the use of an adhesive or minimizing a used amount of the adhesive when the flooring material is placed, and a method of producing the same.

In order to accomplish the above objects, there is provided a sound insulation and non-slip flooring material formed by laminating a plurality of layers through a calender rolling process, the sound insulation and non-slip flooring material includes a glass fiber layer interposed between the layers, an ultraviolet coating layer provided at an upper layer among the layers, and a sound insulation and non-slip layer provided at a lower layer among the layers.

In addition, according to the sound insulation and non-slip flooring material of the present invention, the layers include a surface layer, a printing layer, an intermediate layer, an underlayer, and a balance layer, the glass fiber layer is interposed between the intermediate layer and the underlayer, the ultraviolet coating layer is provided on the surface layer, and the sound insulation and non-slip layer is coated on a lower portion of the balance layer.

In addition, according to the sound insulation and non-slip flooring material of the present invention, the surface layer, the printing layer, and the balance layer include polyvinyl chloride (PVC) and a plasticizer, and the intermediate layer, the underlayer, and the sound insulation and non-slip layer include the polyvinyl chloride (PVC), the plasticizer, and a reinforcement inorganic filler including a calcium carbonate (CaCO₃).

Further, according to the sound insulation and non-slip flooring material of the present invention, the intermediate layer further includes powders of a hydrous magnesium silicate mineral or elvan powders.

Further, according to the sound insulation and non-slip flooring material of the present invention, the flooring material has a whole thickness of 4.4 mm to 4.6 mm, the surface layer has a thickness of 0.40 mm to 0.70 mm, the printing layer has a thickness of 0.05 mm to 0.10 mm, the intermediate layer has a thickness of 0.5 mm to 0.8 mm, the glass fiber layer has a thickness of 0.35 mm to 0.55 mm, the underlayer has a thickness of 1.8 mm to 2.5 mm, the balance layer has a thickness of 0.2 mm to 1.0 mm, the sound insulation and non-slip layer has a thickness of 0.20 mm to 0.70 mm, and the ultraviolet coating layer has a thickness of 5 µm to 12 µm.

In order to accomplish the objects, there is provided a method of producing a sound insulation and non-slip flooring material by laminating a plurality of layers through a calender rolling process. The method includes (a) separately providing an underlayer, an intermediate layer, a balance layer coated with a sound insulation and non-slip layer, a glass fiber layer, a printing layer, and a surface layer, (b) interposing and laminating the glass fiber layer between the underlayer and the intermediate layer through the calendar rolling process, (c) laminating the printing layer to an upper portion of the intermediate layer that is laminated in step (b), (d) laminating the surface layer to an upper portion of the printing layer that is laminated in step (c), (e) laminating the balance layer coated with the sound insulation and non-slip layer to a lower portion of the underlayer, and (f) performing ultraviolet coating with respect to an upper portion of the surface layer that is laminated in step (d).

In addition, according to the method of producing the sound insulation and non-slip flooring material of the present invention, the surface layer, the printing layer, and the balance layer include polyvinyl chloride (PVC) and a plasticizer, and the intermediate layer, the underlayer, and the sound insulation and non-slip layer include the polyvinyl chloride (PVC), the plasticizer, and a reinforcement inorganic filler including a calcium carbonate (CaCO₃).

In addition, according to the method of producing the sound insulation and non-slip flooring material of the present invention, the surface layer includes 25-35 weight parts of the plasticizer based on 100 weight parts of the polyvinyl chloride (PVC), the printing layer includes 6-10 weight parts of the plasticizer based on 100 weight parts of the polyvinyl chloride (PVC), the intermediate layer includes 40-60 weight parts of the plasticizer and 400-550 weight parts of the reinforcement inorganic filler including the calcium carbonate (CaCO₃) based on 100 weight parts of the polyvinyl chloride (PVC), the underlayer includes 40-60 weight parts of the plasticizer and 400-550 weight parts of the calcium carbonate (CaCO₃) based on 100 weight parts of the polyvinyl chloride (PVC), the balance layer includes 20-30 weight parts of the plasticizer based on 100 weight parts of the polyvinyl chloride (PVC), and the sound insulation and non-slip layer includes 80-100 weight parts of the plasticizer, 10-30 weight parts of the calcium carbonate (CaCO₃), and 6-10 weight parts of a foaming agent based on 100 weight parts of the polyvinyl chloride (PVC). The glass fiber layer is formed by mixing 60-90 weight parts of the plasticizer, and 50-70 weight parts of the reinforcement inorganic filler including the calcium carbonate (CaCO₃) based on 100 weight parts of the polyvinyl chloride (PVC), providing the mixture in a sol state into a container, impregnating the container with glass fiber, and drying the glass fiber. The foaming agent includes a foaming cell formed at a foaming ratio of 180-250%.

Further, according to the method of producing the sound insulation and non-slip flooring material of the present invention, the laminating in the step (b) to step (e) is performed at a temperature of 150-170 °C, under pressure of 4-6 kg/cm², and at a speed of 15-25 m/mins.

Further, according to the method of producing the sound insulation and non-slip flooring material of the present invention, the surface layer, the printing layer, the intermediate layer, the underlayer, and the balance layer are formed at a temperature of 150-180 °C and a speed of 35-45 m/mins.

As described above, in the sound insulation and non-slip flooring material and the method of producing the same according to the present invention, as the sound insulation and non-slip layer is provided with a foaming cell formed at the foaming ratio of 180-250%, the non-slip function, a cushion feel, a shock absorption function, floor serviceability, warming, insulation, a soundproof effect, and a dustproof effect of the flooring material can be obtained.

In addition, in the sound insulation and non-slip flooring material and the method of producing the same according to the present invention, when the flooring material is placed indoors, the use of the adhesive is minimized, thereby preventing the TVOC.

Further, in the sound insulation and non-slip flooring material and the method of producing the same according to the present invention, the sound insulation and non-slip layer is provided by drying the PVC compound after the balance layer is coated with the PVC compound, so that the flooring material can be placed without an adhesive. Accordingly, the flooring material can be simply placed and the TVOC can be prevented.

Further, in the sound insulation and non-slip flooring material and the method of producing the same according to the present invention, the glass fiber layer is interposed between the underlayer and the intermediate layer, thereby preventing shrinkage, expansion, and curling which sensitively exert an influence on a surrounding temperature of a product.

### BRIEF DESCRIPTION OF THE DRAWINGS

FIG. 1 is a sectional view showing a sound insulation and non-slip flooring material produced using PVC according to the present invention.
FIG. 2 is a flowchart the production process of the sound insulation and non-slip flooring material using the PVC according to the present invention.
FIG. 3 is a photograph showing a UV coating layer of FIG. 1.
FIG. 4 is a photograph showing the sound insulation and non-slip flooring material of FIG. 1.

### DETAILED DESCRIPTION OF THE INVENTION

The object, other objects, and features of the present invention can be more concretely comprehended on the basis of the present description and accompanying drawings.

Hereinafter, the configuration of the present invention will be described with reference to accompanying drawings.

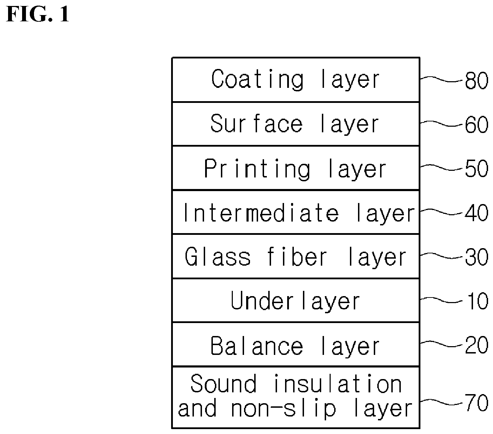

FIG. 1 is a sectional view showing a sound insulation and non-slip flooring material produced using polyvinyl chloride (PVC) according to the present invention.

As shown in FIG. 1, the sound insulation and non-slip flooring material according to the present invention is formed by laminating a plurality of layers through a calender rolling process, and includes a glass fiber layer 30 interposed between the layers, an ultraviolet (UV) coating layer 80 provided at an upper layer among the layers, and a sound insulation and non-slip layer 70 provided at a lower layer among the layers.

The layers include a surface layer 60, a printing layer 50, an intermediate layer 40, an underlayer 10, and a balance layer 20. The glass fiber layer 30 is interposed between the intermediate layer 40 and the underlayer 10, the UV coating layer 80 is provided on the surface layer 60, and the sound insulation and non-slip layer 70 is coated on a lower portion of the balance layer 20.

The glass fiber layer 30 prevents shrinkage, expansion, and curling which sensitively exert an influence on a surrounding temperature of a product. If the glass fiber layer 30 is not provided, a product, which can be placed on a real floor for the use thereof, may not be produced.

The glass fiber layer 30 according to the present invention is provided by mixing 60-90 weight parts of a plasticizer, and 50-70 weight parts of calcium carbonate (CaCO₃), which serves as a reinforcement inorganic filler, based on 100 weight parts of PVC, providing the mixture in a sol state in a container, impregnating the container with glass fiber, and drying the result, thereby allowing the lamination between the intermediate layer 40 and the underlayer 10. For example, the glass fiber layer 30 contains 55g/cm² of G/F.

In addition, a typical flooring material is placed by using an adhesive to volatilize a total volatile organic compound (TVOC) which is harmful to a human body. In order to solve the above problem, as described above, the present invention suggests the sound insulation and non-slip layer 70.

In other words, according to the present invention, the sound insulation and non-slip layer 70 is formed, so that the flooring material can be placed without an adhesive. Accordingly, the flooring material according to the present invention is not harmful to a human body and produces an economical effect. The sound insulation and non-slip layer 70 is formed by mixing 80-100 weight parts of a plasticizer, 10-30 weight parts of CaCO₃, which serves as a reinforcement inorganic filler, and 6-10 weight parts of a foaming agent based on 100 weight parts of PVC, and coating the mixture on a lower portion of the balance layer 20. The sound insulation and non-slip layer 70 is formed by forming a foaming cell at a foaming ratio of 180-250%, preferably, 200% in, for example, a foaming oven, directly coating the foaming cell on the lower portion of the balance layer 20, and drying the coating result. The foaming agent may include azodicarbonamide, but the present invention is not limited thereto.

The sound insulation and non-slip layer 70 has a non-slip function, a cushion feel, a shock absorption function, and floor serviceability, warming, insulation, soundproof effect, and dustproof effects of the flooring material.

In addition, the surface layer 60 includes 25-35 weight parts of a plasticizer based on 100 weight parts of PVC. The printing layer 50 includes 6-10 weight parts of the plasticizer based on 100 weight parts of the PVC. The intermediate layer 40 includes 40-60 weight parts of the plasticizer and 400-550 weight parts of CaCO₃ based on 100 weight parts of the PVC. The underlayer 10 includes 40-60 weight parts of the plasticizer and 400-550 weight parts of CaCO₃ based on 100 weight parts of the PVC. The balance layer 20 includes 20-30 weight parts of the plasticizer based on 100 weight parts of the PVC.

Meanwhile, the intermediate layer may include powders of a hydrous magnesium silicate mineral or elvan powders.

In addition, the intermediate layer may include TALC, which is powders of the hydrous magnesium silicate mineral, or elvan powders.

The TALC is rock belonging to a monoclinic system having a crystal structure similar to that of mica, and has colour of white, silver-while, and pale green. In addition, TALC belongs to 2:1 phyllosilicate similarly to pyrophyllite. The fine powders of the TALC are referred to talcum powders in medicine and industry fields.

As described above, the whole thickness of the flooring material is in the range of 4.4-4.6 mm. The surface layer 60 has the thickness of 0.40-0.70 mm. The printing layer 50 has the thickness of 0.05-0.10 mm. The intermediate layer 40 has the thickness of 0.5-0.8 mm. The glass fiber layer 30 has the thickness of 0.35-0.55 mm. The underlayer 10 has the thickness of 1.8-2.5 mm. The balance layer 20 has the thickness of 0.2-1.0 mm. The sound insulation and non-slip layer 70 has the thickness of 0.20-0.70 mm. The UV coating layer 80 preferably has the thickness of 5-12 µm.

Meanwhile, the UV coating layer 80 preferably has the thickness of 8 µm, and the average thickness of the flooring material is preferably in the range of 4.5 mm ±0.05 mm for the saving of the production costs and the production time.

However, the thickness of each layer of the sound insulation and non-slip flooring material is not limited to the above thickness, but may have various thicknesses according to the use places of the flooring material.

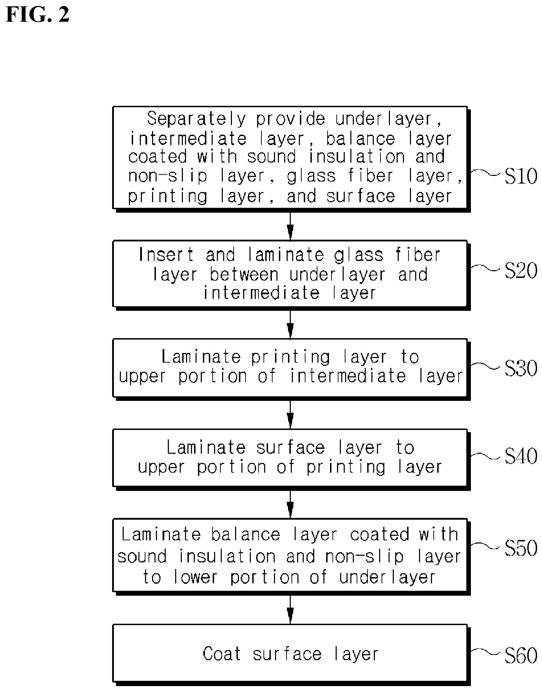

Hereinafter, a method of producing the sound insulation and non-slip flooring material shown in FIG. 1 will be described with reference to FIGS. 2 to 4.

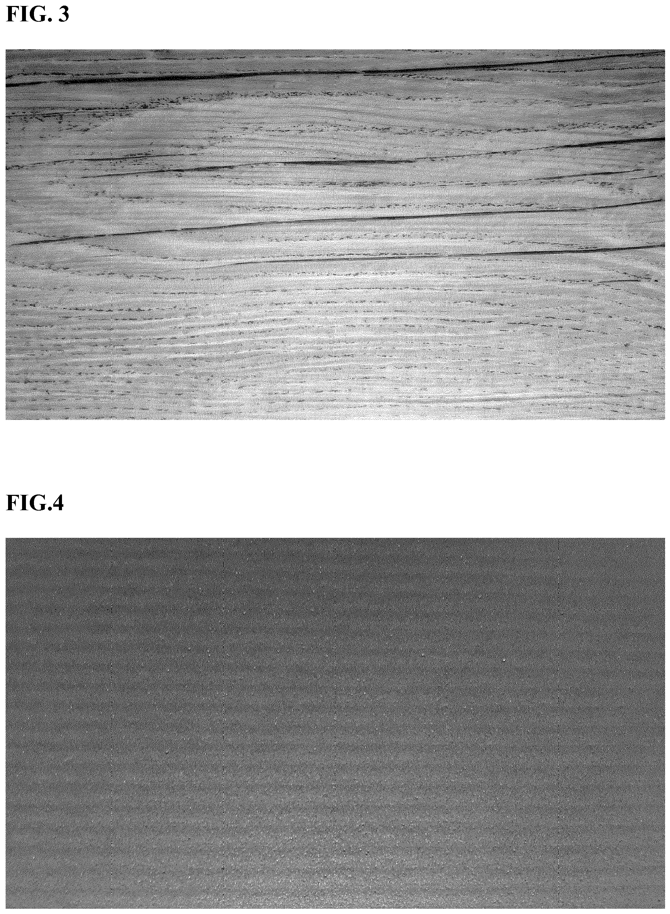

FIG. 2 is a flowchart the production process of the sound insulation and non-slip flooring material using the PVC according to the present invention. FIG. 3 is a photograph showing the UV coating layer of FIG. 1. FIG. 4 is a photograph showing the sound insulation and non-slip flooring material of FIG. 1.

As shown in FIG. 2, the method of producing the sound insulation and non-slip flooring material according to the present invention is to form the sound insulation and non-slip flooring material by laminating a plurality of layers through a calender rolling process. First, according to the method, the underlayer 10, the glass fiber layer 30, the intermediate layer 40, and the balance layer 20 coated with the sound insulation and non-slip layer 70, the printing layer 50, and the surface layer 60 are separately provided (step S10).

In detail, the underlayer 10 is formed of 40-60 weight parts of a plasticizer and 400-550 weight parts of CaCO₃ based on 100 weight parts of PVC. In this case, CaCO₃ applied to the underlayer 10 preferably has a 70-mesh size.

The balance layer 20 is formed of 20-30 weight parts of a plasticizer based on 100 weight parts of PVC. The mixture of 80-100 weight parts of the plasticizer, 10-30 weight parts of CaCO₃, which serves as the reinforcement inorganic filler, and 6-10 weight parts of the foaming agent based on 100 weight parts of PVC is coated with the thickness of 0.20-0.70 mm onto the lower portion of the balance layer 20 to form the sound insulation and non-slip layer 70. Preferably, CaCO₃ having a 70-120 mesh size is applied to the sound insulation and non-slip layer 70.

In addition, 60-90 weight parts of the plasticizer, and 50-70 weight parts of CaCO₃, which serves as a reinforcement inorganic filler, based on 100 weight parts of PVC, are mixed and provided in a sol state in the container, and the container is impregnated with glass fiber and the glass fiber is dried to form the glass fiber layer 30.

The intermediate layer 40 is formed of 40-60 weight parts of the plasticizer and 400-550 weight parts of CaCO₃ based on 100 weight parts of PVC. In this case, CaCO₃ applied to the intermediate layer 40 preferably has a 120-mesh size.

The printing layer 50 is formed of 6-10 weight parts of the plasticizer based on 100 weight parts of PVC.

In addition, the surface layer 60 is formed of 25-35 weight parts of the plasticizer based on 100 weight parts of PVC.

Next, the glass fiber layer 30 is interposed and laminated between the underlayer 10 and the intermediate layer 40, which are separately provided in step S10, through the calender rolling process (step S20). In addition, the glass fiber layer 30 is fed onto the underlayer 10 and the intermediate layer 40 is fed onto the glass fiber layer 30, and the layers are laminated.

Thereafter, the printing layer 50 is laminated to an upper portion of the intermediate layer 40 laminated in step S20 (step S30).

Subsequently, the surface layer 60 as shown in FIG. 3 is laminated to an upper portion of the printing layer 50 which is laminated in the step S30 (step S40).

The upper portion of the balance layer 20 provided at the lower portion thereof with the sound insulation and non-slip layer 70 is laminated to the lower portion of the underlayer 10 laminated in step S40 (step S50).

The laminating works in steps S20 to S50 are performed through the calender rolling process, and subsequently performed at the temperature of 150-170 °C, under the pressure of 4-6 kg/cm², and at the speed of 15-25 m/mins, preferably, 21 m/mins.

Meanwhile, the surface layer 60, the printing layer 50, the intermediate layer 40, the underlayer 10, and the balance layer 20 are preferably formed at the temperature of 150-180°C and at the speed of 35-45 m/mins.

Subsequently, UV coating is performed with respect to the upper portion of the surface layer 60 that is laminated in step S50 (step S60), so that the sound insulation and non-slip flooring material according to the present invention is completely produced.

Thereafter, preferably, the flooring material is cut to a proper size and used according to necessary uses and placing manners.

The sound insulation and non-slip flooring material produced according to the present invention as described above is placed in an apartment house and KSF 2863-1 (Rating of floor impact sound insulation for impact source in buildings and of building elements) is applied to the apartment house, so that it is recognized that the apartment house satisfies the conditions of the light-weight floor impact sound of 58 dB and the heavy-weight floor impact sound of 50 dB.

Although a preferred embodiment of the present invention has been described for illustrative purposes, those skilled in the art will appreciate that various modifications, additions and substitutions are possible, without departing from the scope and spirit of the invention as disclosed in the accompanying claims.

As the sound insulation and non-slip flooring material and the method of producing the same according to the present invention is used, the non-slip function, a cushion feel, a shock absorption function, floor serviceability, warming, insulation, a soundproof effect, and a dustproof effect of the flooring material can be obtained.

## Claims

1. A sound insulation and non-slip flooring material formed by laminating a plurality of layers through a calender rolling process, the sound insulation and non-slip flooring material comprising:
a glass fiber layer interposed between the layers;
an ultraviolet coating layer provided at an upper layer among the layers; and
a sound insulation and non-slip layer provided at a lower layer among the layers.

2. The sound insulation and non-slip flooring material of claim 1, wherein the layers comprise a surface layer, a printing layer, an intermediate layer, an underlayer, and a balance layer, the glass fiber layer is interposed between the intermediate layer and the underlayer, the ultraviolet coating layer is provided on the surface layer, and the sound insulation and non-slip layer is coated on a lower portion of the balance layer.

3. The sound insulation and non-slip flooring material of claim 2, wherein the surface layer, the printing layer, and the balance layer include polyvinyl chloride (PVC) and a plasticizer, and wherein the intermediate layer, the underlayer, and the sound insulation and non-slip layer include the polyvinyl chloride (PVC), the plasticizer, and a reinforcement inorganic filler including a calcium carbonate (CaCO₃).

4. The sound insulation and non-slip flooring material of claim 3, wherein the intermediate layer further comprises powders of a hydrous magnesium silicate mineral or elvan powders.

5. The sound insulation and non-slip flooring material of claim 2, wherein the flooring material has a whole thickness of 4.4 mm to 4.6 mm, the surface layer has a thickness of 0.40 mm to 0.70 mm, the printing layer has a thickness of 0.05 mm to 0.10 mm, the intermediate layer has a thickness of 0.5 mm to 0.8 mm, the glass fiber layer has a thickness of 0.35 mm to 0.55 mm, the underlayer has a thickness of 1.8 mm to 2.5 mm, the balance layer has a thickness of 0.2 mm to 1.0 mm, the sound insulation and non-slip layer has a thickness of 0.20 mm to 0.70 mm, and the ultraviolet coating layer has a thickness of 5 µm to 12 µm.

6. A method of producing a sound insulation and non-slip flooring material by laminating a plurality of layers through a calender rolling process, the method comprising:
(a) separately providing an underlayer, an intermediate layer, a balance layer coated with a sound insulation and non-slip layer, a glass fiber layer, a printing layer, and a surface layer;
(b) interposing and laminating the glass fiber layer between the underlayer and the intermediate layer through the calendar rolling process;
(c) laminating the printing layer to an upper portion of the intermediate layer that is laminated in step (b);
(d) laminating the surface layer to an upper portion of the printing layer that is laminated in step (c);
(e) laminating the balance layer coated with the sound insulation and non-slip layer to a lower portion of the underlayer; and
(f) performing ultraviolet coating with respect to an upper portion of the surface layer that is laminated in step (d).

7. The method of claim 6, wherein the surface layer, the printing layer, and the balance layer include polyvinyl chloride (PVC) and a plasticizer, and wherein the intermediate layer, the underlayer, and the sound insulation and non-slip layer include the polyvinyl chloride (PVC), the plasticizer, and a reinforcement inorganic filler including a calcium carbonate (CaCO₃).

8. The method of claim 7, wherein the surface layer includes 25-35 weight parts of the plasticizer based on 100 weight parts of the polyvinyl chloride (PVC), the printing layer includes 6-10 weight parts of the plasticizer based on 100 weight parts of the polyvinyl chloride (PVC), the intermediate layer includes 40-60 weight parts of the plasticizer and 400-550 weight parts of the reinforcement inorganic filler including the calcium carbonate (CaCO₃) based on 100 weight parts of the polyvinyl chloride (PVC), the underlayer includes 40-60 weight parts of the plasticizer and 400-550 weight parts of the calcium carbonate (CaCO₃) based on 100 weight parts of the polyvinyl chloride (PVC), the balance layer includes 20-30 weight parts of the plasticizer based on 100 weight parts of the polyvinyl chloride (PVC), and the sound insulation and non-slip layer includes 80-100 weight parts of the plasticizer, 10-30 weight parts of the calcium carbonate (CaCO₃), and 6-10 weight parts of a foaming agent based on 100 weight parts of the polyvinyl chloride (PVC),
wherein the glass fiber layer is formed by mixing 60-90 weight parts of the plasticizer, and 50-70 weight parts of the reinforcement inorganic filler including the calcium carbonate (CaCO₃) based on 100 weight parts of the polyvinyl chloride (PVC), providing the mixture in a sol state into a container, impregnating the container with glass fiber, and drying the glass fiber, and
wherein the foaming agent includes a foaming cell formed at a foaming ratio of 180-250%.

9. The method of claim 8, wherein the laminating in the step (b) to step (e) is performed at a temperature of 150-170 °C, under pressure of 4-6 kg/cm², and at a speed of 15-25 m/mins.

10. The method of claim 8, wherein the surface layer, the printing layer, the intermediate layer, the underlayer, and the balance layer are formed at a temperature of 150-180 °C and a speed of 35-45 m/mins.
